(19) Europäisches Patentamt
European Patent Office
Office européen des brevets

(11) **EP 4 572 205 A1**

(12) **EUROPEAN PATENT APPLICATION**
published in accordance with Art. 153(4) EPC

(43) Date of publication:
**18.06.2025 Bulletin 2025/25**

(21) Application number: **23851908.6**

(22) Date of filing: **10.08.2023**

(51) International Patent Classification (IPC):
**H04L 5/00** (2006.01)

(52) Cooperative Patent Classification (CPC):
**H04L 5/00**

(86) International application number:
**PCT/CN2023/112124**

(87) International publication number:
**WO 2024/032687 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 CN 202210955751**

(71) Applicant: **Spreadtrum Communications
(Shanghai) Co., Ltd.
Shanghai 201203 (CN)**

(72) Inventor: **ZHANG, Meng
Shanghai 201203 (CN)**

(74) Representative: **Mewburn Ellis LLP
Aurora Building
Counterslip
Bristol BS1 6BX (GB)**

(54) **CSI REFERENCE RESOURCE DETERMINING METHOD AND APPARATUS FOR SUB-BAND FULL-DUPLEX SCENARIO, AND COMPUTER-READABLE STORAGE MEDIUM**

(57) A method and apparatus for determining a channel state information (CSI) reference resource for a sub-band full duplex scenario, and a computer-readable storage medium are provided. The method includes: determining whether a first time unit is a valid downlink time unit at least according to transmission directions of a plurality of frequency-domain resources on the first time unit, where the plurality of frequency-domain resources on the first time unit support configuration of different transmission directions; and determining at least one frequency-domain resource on the first time unit as the CSI reference resource based on a determination that the first time unit is the valid downlink time unit. The present disclosure provides a method for determining the CSI reference resource such that the traditional CSI reference resource can be applied to the SBFD scenario, and in particular provides a solution for correctly determining an available location of the CSI reference resource on a mixed uplink and downlink time unit under the SBFD scenario, which facilitates the terminal device correctly uses the CSI reference resource and improves communication reliability.

start

determine whether a first time unit is a valid downlink time unit at least according to transmission directions of a plurality of frequency-domain resources on the first time unit, where the plurality of frequency-domain resources on the first time unit support configuration of different transmission directions — S101

determine at least one frequency-domain resource on the first time unit as the CSI reference resource based on a determination that the first time unit is the valid downlink time unit — S102

end

FIG. 1

## Description

CROSS-REFERENCE TO RELATED APPLICATION(S)

This application claims priority to Chinese Patent Application No. 202210955751.3, entitled "method and apparatus for determining CSI reference resource for sub-band full duplex scenario, and computer-readable storage medium", filed August 10, 2022, the entire disclosure of which is hereby incorporated by reference.

TECHNICAL FIELD

This disclosure relates to the field of communication technology, and in particular to a method and apparatus for determining channel state information (CSI) reference resource for a sub-band full duplex scenario, and computer-readable storage medium.

BACKGROUND

In order to adapt to flexible and changing uplink/downlink service scenarios, a flexible Downlink/Uplink (D/U) transmission mode, such as sub-band full duplex (SBFD) mode, may be supported in the future. With the proposal of the new transmission mode, the traditional use logic of Channel State Information (CSI) reference resource also needs to be adapted for applicability. Otherwise a terminal device may not correctly determine an available location of the CSI reference resource under the new transmission mode, which will affect subsequent operations of the terminal device.

Specifically, existing Time Division Duplexing (TDD) systems predefine or configure a transmission direction at the granularity of a time unit (e.g., slot), and thus the transmission direction is either uplink or downlink within one time unit. In the sub-band full duplex scenario, the transmission direction can be configured at the granularity of a frequency-domain resource within one time unit. In other words, multiple frequency-domain resources may be configured within one time unit, and different frequency-domain resources may be configured with different transmission directions. This means that there may be both uplink and downlink frequency-domain resources per unit of time, e.g., a downlink activation Bandwidth Part (BWP) may include both uplink and downlink frequency-domain resources at the same time.

Since both an all-downlink slot and a mixed uplink/downlink slot may exist in the SBFD scenario, the existing logic for determining the CSI reference resource, and in particular the manner for determining a valid downlink slot in time domain for the CSI reference resource, is no longer applicable to the SBFD scenario. Therefore, there is an urgent need in the field for a reasonable determination logic for CSI reference resource, particularly considering whether additional standard clarification (more like clarification) is needed to ensure that traditional CSI reference resources can utilize time units (e.g., slots) or frequency-domain units in the SBFD scenario.

SUMMARY

The technical problem addressed by the present disclosure is how to ensure that traditional CSI reference resources are applicable to the SBFD scenario.

In order to address the above technical problem, embodiments of the present disclosure provide a method for determining a channel state information (CSI) reference resource for a sub-band full duplex scenario. The method includes: determining whether a first time unit is a valid downlink time unit at least according to transmission directions of a plurality of frequency-domain resources on the first time unit, where the plurality of frequency-domain resources on the first time unit support configuration of different transmission directions; and determining at least one frequency-domain resource on the first time unit as the CSI reference resource based on a determination that the first time unit is the valid downlink time unit.

Optionally, determining whether the first time unit is the valid downlink time unit at least according to the transmission directions of the plurality of frequency-domain resources on the first time unit includes: determining that the first time unit is the valid downlink time unit when the transmission directions of the plurality of frequency-domain resources on the first time unit are each downlink.

Optionally, determining whether the first time unit is the valid downlink time unit at least according to the transmission directions of the plurality of frequency-domain resources on the first time unit includes: determining whether the first time unit is the valid downlink time unit according to transmission directions of a portion of the plurality of frequency-domain resources on the first time unit that falls within a first frequency-domain range, where the first frequency-domain range is determined according to a frequency-domain resource carrying a channel quality indicator (CQI); and determining that the first time unit is the valid downlink time unit when the transmission directions of the portion that falls within the first frequency-domain range is downlink or at least partially downlink.

Optionally, determining the at least one frequency-domain resource on the first time unit as the CSI reference resource includes: determining, among the portion of the plurality of frequency-domain resources on the first time unit that falls within the first frequency-domain range, a frequency-domain resource with a downlink transmission direction as the CSI reference resource.

Optionally, determining the at least one frequency-domain resource on the first time unit as the CSI reference resource further includes: not expecting the CSI reference resource to be configured in a frequency-domain resource with a non-downlink transmission direction within the first frequency-domain range on the first time unit.

Optionally, the method further includes: performing CQI calculation using the CSI reference resource; and/or determining a measurement resource using the CSI reference resource.

In order to address the above technical problem, embodiments of the present disclosure further provide an apparatus for determining a CSI reference resource for a sub-band full duplex scenario. The apparatus includes a judging module and a determining module. The judging module is configured to determine whether a first time unit is a valid downlink time unit at least according to transmission directions of a plurality of frequency-domain resources on the first time unit, where the plurality of frequency-domain resources on the first time unit support configuration of different transmission directions. The determining module is configured to determine at least one frequency-domain resource on the first time unit as the CSI reference resource based on a determination that the first time unit is the valid downlink time unit.

In order to address the above technical problem, embodiments of the present disclosure further provide a computer readable storage medium. The computer readable storage medium is a non-volatile storage medium or a non-transitory storage medium and stores a computer program which, when executed by a processor, causes the processor to perform the above method.

In order to address the above technical problem, embodiments of the present disclosure further provide an apparatus for determining a CSI reference resource for a sub-band full duplex scenario. The apparatus includes a memory and a processor. The memory stores a computer program executable on the processor. When executing the computer program, the processor performs the above method.

Compared with the related art, the technical solution in the embodiments of the present disclosure has the following beneficial effects.

Embodiments of the present disclosure provide a method for determining a CSI reference resource for a sub-band full duplex scenario. The method includes: determining whether a first time unit is a valid downlink time unit at least according to transmission directions of a plurality of frequency-domain resources on the first time unit, where the plurality of frequency-domain resources on the first time unit support configuration of different transmission directions; and determining at least one frequency-domain resource on the first time unit as the CSI reference resource based on a determination that the first time unit is the valid downlink time unit.

With the above solution, it is possible to ensure that the terminal device correctly uses the CSI reference resource under the sub-band full duplex scenario, thereby improving communication reliability. Specifically, in the related art, a time unit is identified as a valid downlink time unit as long as there is a downlink symbol or a flexible symbol on the time unit. In comparison, the present solution determines whether or not the first time unit is a valid downlink time unit based on at least the transmission directions of the plurality of frequency-domain resources on the first time unit. As a result, for the SBFD scenario in which multiple frequency-domain resources on one time unit support configuration of different transmission directions, especially for a mixed uplink/downlink time unit, whether the time unit is a valid downlink time unit can be correctly determined by using the present solution, which in turn can help the terminal device to correctly determine the available location of the CSI reference resource.

BRIEF DESCRIPTION OF THE DRAWINGS

FIG. 1 is a flowchart of a method for determining CSI reference resource for a sub-band full-duplex scenario according to embodiments of the present disclosure;

FIG. 2 is a schematic diagram of time-frequency resources for a first exemplary application scenario according to an embodiment of the present disclosure;

FIG. 3 is a schematic diagram of time-frequency resources for a second exemplary application scenario according to an embodiment of the present disclosure;

FIG. 4 is a schematic diagram of time-frequency resources for a third exemplary application scenario according to an embodiment of the present disclosure;

FIG. 5 is a schematic structural diagram of an apparatus for determining CSI reference resource for a sub-band full-duplex scenario according to embodiments of the present disclosure.

DETAILED DESCRIPTION

As stated in the above, there is an urgent need in the field for a reasonable determination logic for CSI reference resources, and in particular, it is necessary to consider whether additional standard clarification (more like clarification) is needed to ensure that traditional CSI reference resources can be used with time units (e.g., slots) or frequency-domain units in SBFD scenarios.

To solve the above technical problem, embodiments of the present disclosure provide a method for determining a CSI reference resource for a sub-band full duplex scenario. The method includes: determining whether a first time unit is a valid downlink time unit at least according to transmission directions of a plurality of frequency-domain resources on the first time unit, where the plurality of frequency-domain resources on the first time unit support configuration of different transmission directions; and determining at least one frequency-domain resource on the first time unit as the CSI reference resource based on a determination that the first time unit is the valid downlink time unit. The frequency-domain resource may be one or a number of Resource Blocks (RBs), or, one or a number of Resource Elements (REs), or, one or a number of sub-bands. The sub-band refer to a sub-band used for CSI reporting.

With the present solution, it is possible to ensure that the terminal device correctly uses the CSI reference resource under the sub-band full duplex scenario, thereby improving communication reliability. Specifically, whether or not the first time unit is a valid downlink time unit is determined based on at least the transmission directions of the plurality of frequency-domain resources on the first time unit. As a result, for the SBFD scenario in which multiple frequency-domain resources on one time unit support configuration of different transmission directions, especially for a mixed uplink/downlink time unit, whether the time unit is a valid downlink time unit can be correctly determined by using the present solution, which in turn can help the terminal device to correctly determine the available location of the CSI reference resource.

Sub-band Full Duplex (SBFD): The sub-band full duplex in the embodiments of the present disclosure can be understood as a communication mechanism similar to full duplex. Specifically, by introducing the concept of frequency-domain resources, different transmission directions can be configured for different frequency-domain resources at the same moment. For the base station, at the same moment, since there can be both a frequency-domain resource configured with the uplink communication direction and a frequency-domain resource configured with the downlink communication direction, uplink and downlink communication can be carried out simultaneously by different terminal devices under the management of the base station. However, for the terminal device, either uplink communication or downlink communication can be performed on the frequency-domain resource at the same moment, and uplink and downlink communication cannot be performed at the same time. Therefore, in the sub-band full duplex scenario in the embodiments of the present disclosure, the base station appears to be able to simultaneously perform uplink and downlink communications, but in fact with different terminal devices. Therefore, the sub-band full duplex in the embodiments of the present disclosure is a communication mechanism similar to full duplex communication but not essentially the full duplex communication.

Frequency-domain resource: the frequency-domain resource in the embodiments of the present disclosure can be understood as a newly introduced granularity of communication in the frequency domain between a network device and a terminal device. The frequency-domain resource may be a sub-band (also written subband). It is to be noted that in the embodiments the sub-band may be understood as a sub-frequency band divided from a bandwidth. The bandwidth may be a system bandwidth. Optionally, the bandwidth may be a BWP. Optionally, the bandwidth may also be a carrier.

CSI Reference Resource: the CSI reference resource in the embodiments of the present disclosure may be understood as a time-frequency resource, which is a time unit (e.g., a slot) in the time domain and a CSI reporting bandwidth in the frequency domain. For example, the frequency domain of the CSI reference resource may be equal to the CSI reporting bandwidth. When CSI is sub-band measurement or reporting, the frequency domain of the CSI reference resource is equal to the sub-band to be reported for. For another example, when CSI is wideband measurement, the frequency domain of the CSI reference resource is wideband.

Further, the CSI reference resource are associated with the CSI reporting. That is, each CSI reporting time corresponds to one CSI reference resource. For example, for Periodicity-CSI (P-CSI) reporting, where the CSI is reported periodically, each reporting time corresponds to one CSI reference resource. Therefore, the time-domain location of the CSI reference resource can be calculated from the CSI report.

Assuming that a slot where the CSI report is located is slot $n'$, the time-domain location of the CSI reference resource is $n-nCSI\_ref$.

The calculation of slot $n$ can specifically include the following. As can be seen from the description of function of the CSI reference resource below, the CSI reference resource is a downlink resource, thus corresponding to a downlink slot. Therefore, slot $n$ is a reporting slot corresponding to the CSI report time slot $n'$. The calculation formula can be expressed as: $n =$

$$\left\lfloor n' \frac{2^{\mu_{DL}}}{2^{\mu_{UL}}} \right\rfloor$$

, where $\mu_{DL}$ and $\mu_{UL}$ correspond to an uplink sub-carrier spacing and a downlink sub-carrier spacing, respectively. DL represents downlink and UL represents uplink. $\mu_{DL}$ and $\mu_{UL} = 0, 1, 2, 3$ correspond to the sub-carrier spacing of 15 kHz, 30 kHz, 60 kHz, 120 kHz, respectively.

As can be seen from the above formula, essentially slot $n$ corresponds to slot $n'$, which is specifically calculated based on the uplink subcarrier spacing and downlink subcarrier spacing. The reason for the need to calculate based on the uplink and downlink subcarrier spacing is that different subcarrier spacing configurations are supported in New Radio (NR), and therefore a similar conversion method is needed in many situations.

$nCSI\_ref$ can be specifically calculated as follows.

1) P/SP-CSI

If the P-SCI or Semi-Persistent-CSI (SP-CSI) corresponds to a single measurement resource, $nCSI\_r$-

*ef* satisfies two conditions: a) *nCSI_ref* is greater than or equal to 4; and b) *nCSI_ref* is the smallest value such that the CSI reference resource is a valid downlink slot. The measurement resource is a measurement resource configured to the current CSI, which can be either a CSI-RS (Reference Signal) or a Synchronization Signal/Physical Broadcast Channel Block (SS/PBCH BLOCK, i.e., the SSB). In this scenario, the CSI reference resource can be determined as follows. Assuming that both the uplink subcarrier spacing and downlink subcarrier spacing are 15 kHz, then firstly, according to the first condition, set *nCSI_ref* to 4, corresponding to slot A. At this point, it is necessary to determine whether slot A is a valid downlink slot. If slot A is a valid downlink slot, then slot A is the CSI reference resource and *nCSI_ref*=4. If slot A is not a valid downlink slot, then set *nCSI_ref* to 5, which corresponds to slot A-1, and determine whether slot A-1 is a valid downlink slot. If yes, then slot A-1 is a valid downlink timeslot, and if not, then continue the above operation until a valid downlink slot is found.

If the P/SP-CSI corresponds to multiple measurement resources, *nCSI_ref* satisfies two conditions: a) *nCSI_ref* is greater than or equal to 5; and b) *nCSI_ref* is the smallest value such that the CSI reference resource is a valid downlink slot. In this scenario, the specific determination logic of the CSI reference resource can be found in the relevant description of the above scenario, with the difference that the value of *nCSI_ref* is modified from 4 to 5.

2) A-CSI

The aperiodic-CSI (A-CSI) is slightly more complex. If the Downlink Control Information (DCI) that triggers the A-CSI is in the same slot as the location for reporting the A-CSI, the CSI reference resource is the slot where the DCI that triggers the CSI report is located; otherwise, *nCSI_ref* satisfies the following conditions: a) *nCSI_ref* is greater than or equal to $\left\lfloor Z'/N_{symb}^{slot} \right\rfloor$ ; b) *nCSI_ref* is the smallest value such that the CSI reference resource is a valid downlink slot. In the above, Z' is a variable related to the processing delay, $N_{symb}^{slot}$ represents the number of symbols contained in one slot. The unit of Z' is symbol, which means that the processing delay is converted in the unit of a slot.

Valid downlink slot: a valid downlink slot is required to satisfy the following conditions: a) the slot includes at least one higher layer configured downlink or flexible symbol; and b) the slot does not fall within a configured measurement gap.

The function of CSI reference resource.

Function 1: the CSI reference resource is used to calculate Channel Quality indicator (CQI). Channel measurement essentially depends on the implementation of the terminal device. For example, some terminal device has strong capability, which can achieve a target block error rate (BLER) requirement by using a certain modulation and coding scheme (MCS) at Layer 1 Signal to Interference and Noise Ratio (L1-SINR) = 10dB. However, some terminal device is less capable and needs a SINR = 12dB to achieve the target BLER. Therefore, if both terminal devices measure a SINR of 10 dB, the two terminal devices should feedback different values of CQI.

Furthermore, even for the same terminal device, different packet sizes (i.e., transport block size, TBS for short) will result in different BLERs. For example, SINR = 10 dB. If a TBS currently being transmitted is 1,000 bits, using a particular MCS for transmission, a corresponding BLER is 0.01. If a TBS is 500 bits, using the same MCS for transmission, a corresponding BLER may be 0.1.

Therefore, the concept such as CSI reference resource is needed when quantifying CQI. The base station (e.g., gNB) needs to know the situation under which the CQI of the terminal device is calculated.

Assume that the terminal device performs channel measurement with the CSI-RS and obtains a channel state such as SINR. The terminal device assumes that a downlink packet is transmitted on a CSI reference resource and that the corresponding channel state is the one obtained by CSI-RS measurement. At this point, the terminal device selects a CQI from the CQI table, where the selected CQI enables the assumed transmitting downlink packet to be transmitted with a BLER less than a target BLER when transmitted at the measured channel state. The target BLER is configured by the gNB.

Function 2: the CSI reference resource is used for determining a measurement resource. The network device may configure periodic measurement resources for the terminal device. For CSI reporting, the CSI reference resource can be used to determine which measurement resource is used for measurement. Specifically, the measurement resource corresponding to the CSI reporting must be located before the CSI reference resource. The network device may further configure, via higher layer signaling, which of the multiple measurement resources located before the CSI reference resource is to be used. For example, it may be configured to use only the last resource located before the CSI reference resource for measurement. As another example, it may be configured to support smoothing, i.e., all measurement resources located before the CSI reference resource may be used, and how to use the resources can be self-implemented by the terminal device. This is on the one hand for the base station to know through which one or more measurement resources the terminal device obtains the measurement. On the other hand, it is also to ensure the implementation capability of the terminal device. In other words, the terminal device will only use the measurement resource before the CSI reference resource for CSI measurement. In this way, the terminal device has enough time to process the CSI from measurement to reporting.

Embodiments of the present disclosure provide the method involving a network device and a terminal device, where uplink communication or downlink communication can be performed between the network device and the terminal device.

Terminal device: The terminal device in the embodiments of the disclosure is a device having wireless communication functions, and may be referred to as a terminal, a user equipment (UE), a mobile station (MS), a mobile terminal (MT), an access terminal device, an in-vehicle terminal device, a terminal device in industrial control, a UE unit, a UE station, a mobile station, a remote station, a remote terminal device, a mobile device, a UE terminal device, a wireless communication device, a UE agent, a UE apparatus, or the like. The terminal device may be stationary or mobile. It should be noted that, the terminal device may support at least one wireless communication technology, for example, long term evolution (LTE), new radio (NR), and the like. For example, the terminal device may be a mobile phone, a tablet computer (pad), a desktop computer, a notebook computer, an all-in-one computer, an in-vehicle terminal, a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) telephone, a wireless local loop (WLL) station, a personal digital assistant (PDA), various devices having wireless communication functions such as a handheld device, a computing device, or other processing devices connected to a wireless modem, a wearable device, a terminal device in a future mobile communication network, or a terminal device in a future evolved public land mobile network (PLMN). In some embodiments of the disclosure, the terminal device may also be an apparatus with transceiver functions, for example, a system-on-chip (SOC). The SOC may include a chip, and may further include other discrete components.

Network device: The network device in the embodiments of the disclosure is a device for providing wireless communication functions for the terminal device, and may also be referred to as an access network device, a radio access network (RAN) device, an access network element, or the like. The network device may support at least one wireless communication technology, such as LTE and NR. Exemplarily, the network device includes, but is not limited to, a next-generation base station (gNB), an evolved node B (eNB), and a radio network controller (RNC), a node B (NB), a base station controller (BSC), a base transceiver station (BTS), a home base station (for example, a home evolved node B, or home node B (HNB)), a baseband unit (BBU), a sending and receiving point (TRP), a sending point (TP), a mobile switching center, etc. in a 5th-generation (5G) mobile communication system. The network device may also be a radio controller, a centralized unit (CU), and/or a distributed unit (DU) in a cloud radio access network (CRAN) scenario, or the network device may be a relay station, an access point, an in-vehicle device, a terminal device, a wearable device, and a network device in future mobile communications or a network device in a future evolved PLMN, etc. In some embodiments, the network device may also be a device that provides wireless communication functions for the terminal device, such as an SOC. For example, the SOC may include a chip and may further include other discrete components.

In order to make the above objects, features, and beneficial effects of the present disclosure more obvious and understandable, the following specific embodiments of the present disclosure are described in detail in conjunction with the accompanying drawings.

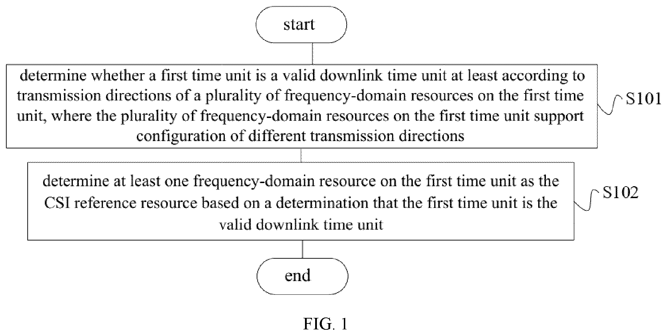

FIG. 1 is a flowchart of a method for determining a CSI reference resource for a sub-band full-duplex scenario according to the embodiments of the present disclosure.

The solution of the present embodiment may be applied to a sub-band full duplex scenario in a TDD communication system. In this scenario, the network device divides the frequency domain into at least two frequency-domain resources, and configures transmission directions at a granularity of the frequency-domain resource within the same time-domain resource. As a result, the network device can use different frequency-domain resources to simultaneously perform uplink communication and downlink communication with different terminal devices, and a plurality of terminal devices can simultaneously perform uplink communication and downlink communication with the network device on different frequency-domain resources.

Further, using the present solution, the terminal device correctly determines a time-domain location of the CSI reference resource in the SBFD scenario.

In a specific implementation, the method for determining a CSI reference resource for a sub-band full duplex scenario provided in operation S101 to operation S102 below may be performed by a chip in the terminal device having a function of determining a CSI reference resource, or may be performed by a baseband chip in the terminal device.

Specifically, with reference to FIG. 1, the method for determining a CSI reference resource for a sub-band full duplex scenarios described in this embodiment may include the following operations.

Operation S101, whether a first time unit is a valid downlink time unit is determined at least according to transmission directions of a plurality of frequency-domain resources on the first time unit, where the plurality of frequency-domain resources on the first time unit support configuration of different transmission directions.

Operation S102, based on a determination that the first time unit is the valid downlink time unit, at least one frequency-domain resource on the first time unit is determined as the CSI reference resource.

Further, the frequency-domain resource may be one or several resource blocks (RBs), or one or several REs, or one or several sub-bands for CSI reporting.

Further, the plurality of frequency-domain resources may include a first frequency-domain resource and a second frequency-domain resource, where the first frequency-domain resource and the second frequency-domain resource on the same time unit support configuration of different transmission directions. That is, for the first frequency-domain resource and the second frequency-domain resource on the same time unit, the network device may configure the transmission directions of the two frequency-domain resources to be the same or opposite according to actual needs.

For example, the supported configured transmission direction of the first frequency-domain resource includes uplink, and the supported configured transmission direction of the second frequency-domain resource includes downlink. For another example, the supported configured transmission direction of the first frequency-domain resource includes downlink, and the supported configured transmission direction of the second frequency-domain resource includes uplink. Taking the first frequency-domain resource as an example, it should be noted that in some embodiments, the supported configured transmission direction of the first frequency-domain resource may include uplink and downlink, and whether the specific configured transmission direction is uplink or downlink may be indicated by the network device. In embodiments of the present disclosure, the first frequency-domain resource may also support to be configured with only one transmission direction, such as either uplink or downlink, which is not limited herein.

In embodiments of the present disclosure, the time unit may be the granularity of communication between the terminal device and the network device in the time domain. For example, the time unit may be a slot, a mini slot, a subframe, a symbol, a frame, and the like.

Further, the same time unit means one same time unit. For example, a plurality of frequency-domain resources on the same time unit may be, for example, two frequency-domain resources on slot 0.

In a specific implementation, the number of uplink frequency-domain resources among the plurality of frequency-domain resources on the same time unit may be greater than 1. For example, if there are 3 frequency-domain resources on the same time unit, the transmission directions of the 3 frequency-domain resources may be, for example, UDU, DUD, DUU, UUD, or UUU, where U denotes uplink and D denotes downlink. UDU indicates that the transmission directions of the 3 frequency-domain resources indexed from low to high on the same time unit are uplink, downlink, and uplink, respectively. DUD indicates that the transmission directions of the 3 frequency-domain resources indexed from low to high on the same time unit are downlink, uplink, and downlink, respectively. DUU indicates that the transmission directions of the 3 frequency-domain resources indexed from low to high on the same time unit are downlink, uplink, and uplink, respectively. UUD indicates that the transmission directions of the 3 frequency-domain resources indexed from low to high on the same time unit are uplink, uplink, and downlink, respectively. UUU indicates that the transmission directions of the 3 frequency-domain resources indexed from low to high on the same time unit are all uplink.

In a specific implementation, operation S101 may include the operation of determining that the first time unit is a valid downlink time unit when the transmission directions of the plurality of frequency-domain resources on the first time unit are all downlink. That is, a mixed uplink/downlink time unit in the SBFD scenario cannot be considered as a valid downlink time unit.

In a typical application scenario, taking the time unit as a slot as an example, a valid downlink slot needs to satisfy the following conditions: a) the slot includes at least one downlink or flexible symbol configured by higher layer signaling; b) the slot does not fall within the configured measurement gap; and c) the slot must not be a mixed uplink/downlink slot.

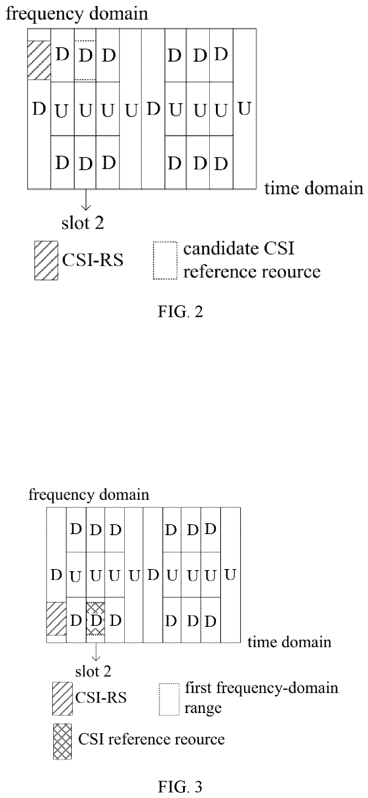

For example, referring to FIG. 2, a frequency-domain bandwidth of the CSI reference resource can be determined based on the frequency-domain bandwidth of the CSI-RS, and the slot in which the CSI reference resource may exist can be determined based on the aforementioned determination logic of the *nCSI_ref.* In FIG. 2, slot 2 is shown as an example of a slot in which the CSI reference resource may exist. On slot 2, a frequency-domain bandwidth that is the same as the frequency-domain bandwidth of the CSI-RS is a candidate CSI reference resource. The terminal device using the present solution further determines whether a transmission direction of each frequency-domain resource on slot 2 is downlink. Since the transmission directions of the three frequency-domain resources on slot 2 illustrated in FIG. 2 is DUD, the condition for a valid downlink slot is not satisfied. Therefore, the terminal device determines that slot 2 is not a valid downlink slot. Accordingly, the candidate CSI reference resource on slot 2 is discarded, and the terminal device will not use the candidate CSI reference resource for operations such as CQI calculation.

In a specific implementation, operation S101 may include the operation of determining whether the first time unit is the valid downlink time unit according to transmission directions of a portion of the plurality of frequency-domain resources on the first time unit that falls within a first frequency-domain range, where the first frequency-domain range is determined according to a frequency-domain resource carrying a channel quality indicator (CQI); and determining that the first time unit is the valid downlink time unit when the transmission direction of the portion that falls within the first frequency-domain range is downlink or at least partially downlink.

Specifically, in this specific implementation, the conditions for determining a valid downlink time unit are slightly relaxed such that certain mixed uplink/downlink time units that meet the conditions can also be determined as valid downlink time units.

Further, regardless of the presence of an uplink frequency-domain resource on the first time unit, based on the present specific implementation, the first time unit can be determined as a valid downlink time unit as long as a downlink frequency-domain resource satisfying the computational bandwidth of the CQI is present on the first time unit.

The first frequency-domain range, i.e. the frequency-domain bandwidth of the CQI (which may also be referred to as the computational bandwidth of the CQI), may be a frequency-domain range corresponding to CSI reporting configured at the network side, or a frequency-domain range of a reference signal used for CSI measurement. The first frequency-domain range may be equal to the frequency-domain bandwidth of the CQI. The reference signal used for CSI measurement may be a CSI-RS or SSB or another reference signal.

The presence of the downlink frequency-domain resource on the first time unit that satisfies the computational bandwidth of the CQI may refer to, for example, that transmission directions of a portion of frequency-domain resources, among the plurality of frequency-domain resources on the first time unit, corresponding to the computational bandwidth of the CQI are all downlink. Alternatively, at least some transmission directions of the portion of frequency-domain resources corresponding to the computational bandwidth of the CQI are downlink.

Further, operation S102 may include the operation of: determining, among the portion of the plurality of frequency-domain resources on the first time unit that falls within the first frequency-domain range, a frequency-domain resource with a downlink transmission direction as the CSI reference resource.

In a typical application scenario, taking the time unit as a slot for example, a valid downlink slot needs to satisfy the following conditions: a) the slot includes at least one higher-layer configured downlink or flexible symbol; b) the slot does not fall within the configured measurement gap; and c) the frequency-domain bandwidth of at least one downlink frequency-domain resource in the mixed uplink/downlink slot satisfies the computational bandwidth of the CQI.

For example, referring to FIG. 3, the slot in which the CSI reference resource may exist can be determined based on the aforementioned determination logic of the *nCSI_ref.* In FIG. 3, slot 2 is shown as an example of a slot in which the CSI reference resource may exist. A first frequency-domain range may be obtained by mapping a frequency-domain bandwidth of CQI (not shown) to slot 3. The terminal device using the present solution further determines whether the transmission directions of the frequency-domain resources in the first frequency-domain range on slot 2 are all downlink. Since the frequency-domain resources falling within the first frequency-domain range on slot 2 illustrated in FIG. 2 are all downlink frequency-domain resources, the condition c) for a valid downlink slot is met. Therefore, the terminal device determines that slot 2 is a valid downlink slot. Accordingly, all of the resources falling within the first frequency-domain range on slot 2 may be determined to be the CSI reference resource.

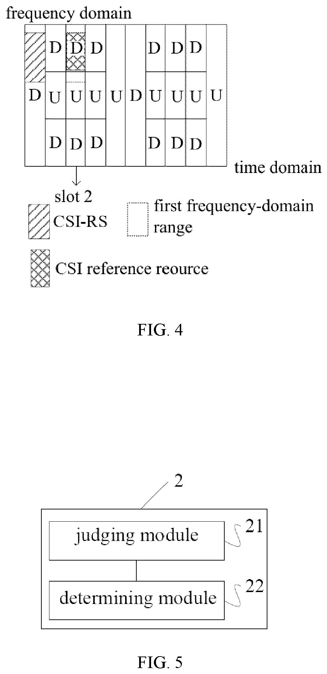

As another example, referring to FIG. 4, a slot in which the CSI reference resource may exist may be determined according to the aforementioned determination logic of *nCSI_ref.* In FIG. 4, slot 2 is shown as an example of a slot in which the CSI reference resources may exist. A first frequency-domain range may be obtained by mapping a frequency-domain bandwidth of a CQI (not shown) to slot 4. The terminal device using the present solution further determines whether the transmission directions of the frequency-domain resources in the first frequency-domain range on slot 2 are all downlink. Although there are some uplink frequency-domain resources in the first frequency-domain range on slot 2 illustrated in FIG. 2, it can still be considered to meet the condition c) for a valid downlink slot. Therefore, the terminal device determines that slot 2 is a valid downlink slot. Accordingly, among the resources corresponding to the first frequency-domain range on slot 2, the portion of frequency-domain resources with a transmission direction of downlink may be determined as the CSI reference resource.

In a specific implementation, the CSI reference resources may be contiguous or non-contiguous in the frequency domain. Specifically, since a single frequency-domain resource on a single time unit in the SBFD scenario may be non-contiguous in the frequency domain, the CSI reference resource determined using the solution of the present embodiment may also be non-contiguous in the frequency domain.

In a specific implementation, when performing operation S102, the CSI reference resource is not expected to be configured as a frequency-domain resource with a transmission direction of non-downlink in the first frequency-domain range on the first time unit. The frequency-domain resource with the transmission direction of non-downlink may include a frequency domain range of an uplink transmission direction and/or a guard band.

Specifically, the foregoing specific implementations are all described in the case of keeping the frequency domain bandwidth of the CSI-RS and the frequency domain bandwidth of the CSI reference resource consistent. In practice, since the CSI-RS is independently configured by the network side, there may be a situation in which the frequency domain bandwidth of the CSI-RS and the frequency domain bandwidth of the CSI reference resource are not consistent.

Based on this, in the present specific implementation, there may be an additional condition to be satisfied for a valid downlink slot: d) the terminal device does not expect the frequency domain range of CSI reporting to overlap with an uplink frequency-domain resource and/or the guard band in the case where multiple sub-bands can be configured on the same time unit. Optionally, if the frequency domain range of CSI reporting overlaps with an uplink frequency-domain resource and/or the guard band in the case where multiple sub-bands can be configured on the same time unit, the terminal device may consider that the frequency-domain resources of the overlapping portion or the CSI sub-bands to which the overlapping portion belongs are not available for the frequency-domain resources of the CSI reference resource, or in other words, the terminal device only considers a frequency-domain resource where the frequency domain range of CSI reporting and the frequency-domain resource of the downlink sub-band on the first unit overlap, to be the frequency-domain resource of the CSI reference resource.

The guard band may be set between two frequency-domain resources with opposite transmission directions on the same time unit to avoid direct adjacency of frequency-domain resources with opposite transmission directions. This helps to reduce mutual interference between neighboring sub-bands.

For example, a frequency-domain resource with downlink transmission direction on the first time unit may be noted as a target frequency-domain resource, and a frequency-domain resource other than the downlink frequency-domain resource among the plurality of frequency-domain resources on the first time unit may be noted as a non-target frequency-domain resource. The terminal device does not expect the CSI reference resource to be configured in the non-target frequency-domain resource and only expects the CSI reference resource to be configured in the target frequency-domain resource. Accordingly, the base station will not configure the CSI reference resources or the frequency domain information for CSI reporting onto the non-target frequency-domain resource.

In a specific embodiment, after performing operation S102 to determine the CSI reference resource, the terminal device may further perform CQI calculation using the CSI reference resource.

In another specific embodiment, after performing operation S102 to determine the CSI reference resource, the terminal device may further determine a measurement resource using the CSI reference resource.

From the above, with the above solution, it is possible to ensure that the terminal device correctly uses the CSI reference resource under the sub-band full duplex scenario, thereby improving communication reliability. Specifically, in the related art, a time unit is identified as a valid downlink time unit as long as there is a downlink symbol or a flexible symbol on the time unit. In comparison, the present solution determines whether or not the first time unit is a valid downlink time unit based on at least the transmission directions of the plurality of frequency-domain resources on the first time unit. As a result, for the SBFD scenario in which multiple frequency-domain resources on one time unit support configuration of different transmission directions, especially for a mixed uplink/-downlink time unit, whether the time unit is a valid downlink time unit can be correctly determined by using the present solution, which in turn can help the terminal device to correctly determine the available location of the CSI reference resource.

FIG. 5 is a schematic structural diagram of an apparatus 2 for determining a CSI reference resource for a sub-band full duplex scenario according to embodiments of the present disclosure. It is understood by those skilled in the art that the apparatus 2 for determining a CSI reference resource for a sub-band full-duplex scenario described in this embodiment may be used to implement the technical solution of the method in the embodiments described in FIG. 1 to FIG. 4 above.

Specifically, with reference to FIG. 5, the apparatus 2 for determining the CSI reference resource for the sub-band full-duplex scenario described in this embodiment may include a judging module 21 and a determining module 22. The judging module 21 is configured to determine whether a first time unit is a valid downlink time unit at least according to transmission directions of a plurality of frequency-domain resources on the first time unit, where the plurality of frequency-domain resources on the first time unit support configuration of different transmission directions. The determining module 22 is configured to determine at least one frequency-domain resource on the first time unit as the CSI reference resource based on a determination that the first time unit is the valid downlink time unit.

For more content about the working principle and working mode of the apparatus 2 for determining the CSI reference resource for the sub-band full duplex scenario, reference may be made to the relevant descriptions in FIG. 1 to FIG. 4 above, which will not be repeated herein.

In a specific implementation, the above-described apparatus 2 for determining the CSI reference resource for the sub-band full-duplex scenario may correspond to a chip with a CSI reference resource determination function in the terminal device, or a chip with a data processing function, such as a System-On-a-Chip (SOC), a baseband chip, and the like; or correspond to a chip module that includes a chip with a CSI reference resource determination function chip; or corresponding to a chip module having a data processing function chip, or corresponding to a terminal device.

In a specific implementation, the modules/units included in the devices and products described in the above embodiments may be software modules/units, hardware modules/units, or partly software modules/units and partly hardware modules/units.

For example, for each device or product applied to or integrated in a chip, each module/unit included therein may be implemented in hardware such as circuits, or at least part of the modules/units may be implemented in software programs, which run on a processor integrated in the chip, and the remaining (if any) modules/units may be implemented in hardware such as circuits. For each device or product applied to or integrated in a chip module, each module/unit included therein may be implemented in hardware such as circuits, and different modules/units may be located in the same component (such as a chip, circuit module, etc.) or in different components of the chip module, or at least part of the modules/units may be implemented in software programs, which run on a processor integrated in the chip module, and the remaining (if any) modules/units may be implemented in hardware such as circuits. For each device or product applied to or integrated in a terminal, each module/unit included therein may be implemented in hardware such as circuits, and different modules/units may be located in the same component (such as a chip, circuit module, etc.) or in different components of the terminal, or at least part of the modules/units may be implemented in software programs, which run on a processor integrated in a processor integrated in the terminal, and the remaining (if any) modules/units may be implemented in hardware such as circuits.

The embodiments of the present disclosure further provide a computer-readable storage medium, which is a non-volatile storage medium or a non-transitory storage medium, on which a computer program is stored. When the computer program is executed by a processor, the operations of the method for determining the CSI reference resource for the sub-band full duplex scenario provided in any embodiment shown in FIG. 1 to FIG. 4 are executed. Preferably, the storage medium may include a computer-readable storage medium such as non-volatile memory or non-transitory memory. The storage medium may include ROM, RAM, Disk or CD, etc.

The embodiments of the present disclosure further provide an apparatus for determining a CSI reference resource for a sub-band full duplex scenario, including a memory and a processor. The memory stores a computer program that can be executed on the processor, and when the processor executes the computer program, the operations of the method for determining the CSI reference resource for a sub-band full duplex scenario provided in any embodiment shown in FIG. 1 to FIG. 4 are executed. For example, the apparatus for determining the CSI reference resource for a sub-band full duplex scenario may be the apparatus 2 for determining the CSI reference resource for a sub-band full duplex scenario shown in FIG. 5. For another example, the apparatus for determining the CSI reference resource for a sub-band full duplex scenario may be a terminal device.

A person skilled in the art can understand that all or part of the operations in the various methods of the above embodiments may be completed by instructing the relevant hardware through a program, and the program may be stored in a computer-readable storage medium. The storage medium may include ROM, RAM, disk or optical disk, etc.

The technical solution is applicable to the 5th generation (5G) communication systems, as well as 4G, 3G communication systems, and various evolved communication systems such as 6G, 7G, etc.

The technical solution is also applicable to different network architectures, including but not limited to relay network architecture, dual link architecture, and Vehicle to Everything architecture.

The 5G CN described in the embodiments of this disclosure can also be referred to as a new core, 5G NewCore, or next generation core (NGC), etc. 5G-CN is set up independently of existing core networks, such as evolved packet core (EPC).

In the present embodiment, a unidirectional communication link from the access network to the terminal is defined as downlink, and data transmitted on the downlink is defined as downlink data. The transmission direction of downlink data is referred to as the downlink direction. A unidirectional communication link from the terminal to the access network is defined as uplink, and data transmitted on the uplink is defined as uplink data. The transmission direction of uplink data is referred to as the uplink direction.

It should be understood that the term "and/or" in this disclosure is only a description of the association relationship between related objects, indicating that there can be three types of relationships, for example, A and/or B can represent: the existence of A alone, the existence of A and B at the same time, and the existence of B alone. In addition, the character "/" in this disclosure indicates that the associated objects are in an "or" relationship.

The term "multiple" used in the embodiments of this disclosure refers to two or more.

The description about "first" and "second" mentioned in the embodiments of this disclosure are only for illustration and differentiation of the described objects, without any order or special limitation on the number of devices in the embodiments of this disclosure, and cannot constitute any limitation on the embodiments of this disclosure.

The term "connection" used in the embodiments of this disclosure refers to various connection manners such as direct connection or indirect connection, in order to achieve communication between devices. The embodiments of this disclosure do not limit this in any way. The terms "network" and "system" used in the embodiments of this disclosure refer to the same concept, and the communication system is referred to as the communication network.

It should be understood that in the embodiments of the present disclosure, the processor may be a central processing unit (CPU), which can also be another general-purpose processor, digital signal processor (DSP), application specific integrated circuit (ASIC), field programmable gate array (FPGA) or other programmable logic device, discrete gate or transistor logic device, discrete hardware component, etc. A general-purpose processor can be a microprocessor or any conventional processor.

It should also be understood that the memory in the embodiments of the present disclosure may be volatile memory or non-volatile memory, or may include both volatile and non-volatile memory. The non-volatile memory can be read-only memory (ROM), programmable read-only memory (PROM), erasable programmable read-only memory (EPROM), electrically erasable programmable read-only memory (EEPROM), or flash memory. The volatile memory can be random access memory (RAM), which is used as an external cache. By way of example but not limitation, many forms of random access memory (RAM) are available, such as static RAM (SRAM), dynamic random access memory (DRAM), synchronous DRAM (SDRAM), double data rate SDRAM (DDR SDRAM), enhanced SDRAM (ESDRAM), synchronous link DRAM (SLDRAM), and direct Rambus RAM (DR RAM).

The above embodiments can be fully or partially implemented through software, hardware, firmware, or any other combination. When implemented through software, the above embodiments can be fully or partially implemented in the form of a computer program product. The computer program product comprises one or more computer instructions or computer programs. When the computer instructions or programs are loaded or executed on a computer, all or part of the processes or functions described in the embodiments of the present disclosure are generated. The computer may be a general-purpose computer, a specialized computer, a computer network, or other programmable device. The computer instructions can be stored in a computer-readable storage medium or transmitted from one computer-readable storage medium to another. For example, the computer instructions can be transmitted from a website site, computer, server, or data center to another website site, computer, server, or data center via wired (such as infrared, wireless, microwave, etc.) means. The computer-readable storage medium can be any available medium that a computer can access, or a data storage device such as a server or data center that contains one or more sets of available media. The available media can be magnetic media (such as floppy disks, hard disks, magnetic tapes), optical media (such as DVDs), or semiconductor media. Semiconductor media can be solid-state drives.

It should be understood that in the various embodiments of the present disclosure, the value of the sequence numbers of the above processes does not imply the order of execution. The order of execution of each process should be determined by its function and internal logic, and should not constitute any limitation on the implementation process of the embodiments of the present disclosure.

In the several embodiments provided in this disclosure, it should be understood that the disclosed methods, devices, and systems can be implemented in other ways. For example, the device embodiments described above are only illustrative. For example, the division of units is only a logical functional division. In practical implementation, there may be other division methods, such as multiple units or components being combined or integrated into another system, or some features being ignored or not executed. On the other hand, the mutual coupling or direct coupling or communication connection displayed or discussed can be indirect coupling or communication connection through some interface, device or unit, which can be electrical, mechanical or other forms.

The units described as separate components may or may not be physically separated, and the components displayed as units may or may not be physical units, i.e. they can be located in one place or distributed across multiple network units. Some or all of the units can be selected according to actual needs to achieve the purpose of this disclosure. In addition, the functional units in various embodiments of the present disclosure can be integrated into one processing unit, or each unit can be physically included separately, or two or more units can be integrated into one unit. The above integrated units can be implemented in the form of hardware or in the form of hardware and software functional units.

The integrated units implemented in the form of software functional units mentioned above can be stored in a computer-readable storage medium. The above software functional units are stored in a storage medium, including several instructions for causing a computer device (which may be a personal computer, server, or network device, etc.) to perform some operations of the method(s) described in various embodiments of the present disclosure. The aforementioned storage medium includes a USB flash drive, a portable hard drive, a Read Only Memory (ROM), a Random Access Memory (RAM), a magnetic disk or optical disk, or various other media that can store program codes.

Although disclosed as above, the present disclosure is not limited to this. Any skilled person in this field may make various changes and modifications without departing from the spirit and scope of the present disclosure, therefore the scope of protection of the present disclosure should be based on the scope defined by the claims.

**Claims**

1. A method for determining a channel state information (CSI) reference resource for a sub-band full duplex scenario, comprising:

    determining whether a first time unit is a valid downlink time unit at least according to transmission directions of a plurality of frequency-domain resources on the first time unit, wherein the plurality of frequency-domain resources on the first time unit support configuration of different transmission directions; and
determining at least one frequency-domain resource on the first time unit as the CSI reference resource, based on a determination that the first time unit is the valid downlink time unit.

2. The method of claim 1, wherein determining whether the first time unit is the valid downlink time unit at least according to the transmission directions of the plurality of frequency-domain resources on the first time unit comprises:
determining that the first time unit is the valid downlink time unit when the transmission directions of the plurality of frequency-domain resources on the first time unit are each downlink.

3. The method of claim 1, wherein determining whether the first time unit is the valid downlink time unit at least according to the transmission directions of the plurality of frequency-domain resources on the first time unit comprises:

determining whether the first time unit is the valid downlink time unit according to transmission directions of a portion of the plurality of frequency-domain resources on the first time unit that falls within a first frequency-domain range, wherein the first frequency-domain range is determined according to a frequency-domain resource carrying a channel quality indicator (CQI); and
determining that the first time unit is the valid downlink time unit when the transmission directions of the portion that falls within the first frequency-domain range is downlink or at least partially downlink.

4. The method of claim 3, wherein determining the at least one frequency-domain resource on the first time unit as the CSI reference resource comprises:
determining, among the portion of the plurality of frequency-domain resources on the first time unit that falls within the first frequency-domain range, a frequency-domain resource with a downlink transmission direction as the CSI reference resource.

5. The method of claim 4, wherein determining the at least one frequency-domain resource on the first time unit as the CSI reference resource further comprises:
not expecting the CSI reference resource to be configured in a frequency-domain resource with a non-downlink transmission direction within the first frequency-domain range on the first time unit.

6. The method of any of claims 1-5, further comprising:

performing CQI calculation using the CSI reference resource; and/or
determining a measurement resource using the CSI reference resource.

7. An apparatus for determining a channel state information (CSI) reference resource for a sub-band full duplex scenario, comprising:

a judging module configured to determine whether a first time unit is a valid downlink time unit at least according to transmission directions of a plurality of frequency-domain resources on the first time unit, wherein the plurality of frequency-domain resources on the first time unit support configuration of different transmission directions; and
a determining module configured to determine at least one frequency-domain resource on the first time unit as the CSI reference resource based on a determination that the first time unit is the valid downlink time unit.

8. A computer readable storage medium, wherein the computer readable storage medium is a non-volatile storage medium or a non-transitory storage medium and stores a computer program which, when executed by a processor, causes the processor to perform the method of any of claims 1 to 6.

9. An apparatus for determining a channel state information (CSI) reference resource for a sub-band full duplex scenario, comprising:

a processor; and
a memory storing a computer program executable on the processor, wherein when executed by the processor, the computer program causes the processor to perform the method of any of claims 1 to 6.

start

determine whether a first time unit is a valid downlink time unit at least according to transmission directions of a plurality of frequency-domain resources on the first time unit, where the plurality of frequency-domain resources on the first time unit support configuration of different transmission directions

S101

determine at least one frequency-domain resource on the first time unit as the CSI reference resource based on a determination that the first time unit is the valid downlink time unit

S102

end

FIG. 1

frequency domain

FIG. 2

frequency domain

FIG. 3

frequency domain

slot 2

CSI-RS

first frequency-domain range

CSI reference reource

FIG. 4

FIG. 5

## INTERNATIONAL SEARCH REPORT

| International application No. |
| --- |
| **PCT/CN2023/112124** |

| A. | CLASSIFICATION OF SUBJECT MATTER |
| --- | --- |
| | H04L 5/00(2006.01)i |

According to International Patent Classification (IPC) or to both national classification and IPC

| B. | FIELDS SEARCHED |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT; ENTXT; DWPI; CNKI; 3GPP: 子带全双工, 全双工, 信道状态信息, 频域, 资源, 时间, 方向, 下行, 有效, SBFD, CSI, channel state information, SUB-BAND FULL DUPLEX, frequency, resource, time, downlink, direction

| C. | DOCUMENTS CONSIDERED TO BE RELEVANT | |
| --- | --- | --- |
| Category* | Citation of document, with indication, where appropriate, of the relevant passages | Relevant to claim No. |
| A | CMCC. "Discussion on subband non-overlapping full duplex" *3GPP TSG RAN WG1 #109-e R1-2204304*, 20 May 2022 (2022-05-20), section 2 | 1-9 |
| A | CN 109889248 A (HUAWEI TECHNOLOGIES CO., LTD.) 14 June 2019 (2019-06-14) entire document | 1-9 |
| A | US 2022014954 A1 (QUALCOMM INC.) 13 January 2022 (2022-01-13) entire document | 1-9 |
| A | US 2022086839 A1 (QUALCOMM INC.) 17 March 2022 (2022-03-17) entire document | 1-9 |
| A | WO 2022005997 A1 (QUALCOMM INC.) 06 January 2022 (2022-01-06) entire document | 1-9 |
| A | QUALCOMM INC. "On Deployment scenarios and evaluation Methodology for NR duplex evolution" *3GPP TSG RAN WG1 #109-e R1-2205030*, 20 May 2022 (2022-05-20), entire document | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 October 2023** | **24 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112124**

| Patent document cited in search report | | | Publication date (day/month/year) | Patent family member(s) | | | Publication date (day/month/year) |
|---|---|---|---|---|---|---|---|
| CN | 109889248 | A | 14 June 2019 | ES | 2690361 | T3 | 20 November 2018 |
| | | | | WO | 2014071638 | A1 | 15 May 2014 |
| | | | | EP | 3840241 | A1 | 23 June 2021 |
| | | | | US | 2018091208 | A1 | 29 March 2018 |
| | | | | US | 2021036755 | A1 | 04 February 2021 |
| | | | | EP | 3402087 | A1 | 14 November 2018 |
| | | | | US | 2015244444 | A1 | 27 August 2015 |
| | | | | EP | 2919506 | A1 | 16 September 2015 |
| | | | | CN | 104662945 | A | 27 May 2015 |
| | | | | IN | 201501144 | P3 | 27 May 2016 |
| | | | | CN | 108599832 | A | 28 September 2018 |
| | | | | CN | 109905222 | A | 18 June 2019 |
| | | | | CN | 110034806 | A | 19 July 2019 |
| | | | | CN | 110034807 | A | 19 July 2019 |
| | | | | IN | 201928036732 | A | 02 October 2020 |
| US | 2022014954 | A1 | 13 January 2022 | WO | 2022010572 | A1 | 13 January 2022 |
| | | | | EP | 4179657 | A1 | 17 May 2023 |
| | | | | IN | 202247067230 | A | 09 December 2022 |
| | | | | CN | 115769522 | A | 07 March 2023 |
| US | 2022086839 | A1 | 17 March 2022 | WO | 2022060627 | A1 | 24 March 2022 |
| | | | | KR | 20230069925 | A | 19 May 2023 |
| | | | | EP | 4215003 | A1 | 26 July 2023 |
| | | | | IN | 202327004039 | A | 14 April 2023 |
| | | | | CN | 116076139 | A | 05 May 2023 |
| WO | 2022005997 | A1 | 06 January 2022 | EP | 4173218 | A1 | 03 May 2023 |
| | | | | IN | 202247061599 | A | 04 November 2022 |
| | | | | CN | 115836503 | A | 21 March 2023 |

Form PCT/ISA/210 (patent family annex) (July 2022)

**EP 4 572 205 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210955751